# EUROPÄISCHE PATENTSCHRIFT

(11) **EP 2 508 857 B1**
(45) Veröffentlichungstag und Bekanntmachung des Hinweises auf die Patenterteilung: **18.03.2015**
(21) Anmeldenummer: 11161685.0
(22) Anmeldetag: 08.04.2011
(51) Int. Cl.: G01K 7/12

(54) **Baugruppe zum Anschluss eines Thermoelementes**
Component assembly for connecting a thermocouple
Composant de raccordement d'une thermocouple

(43) Veröffentlichungstag der Anmeldung: 10.10.2012
(73) Patentinhaber: Siemens Aktiengesellschaft, 80333 München (DE)
(72) Erfinder: Fischer, Peter, 92421, Schwandorf (DE)

(56) Entgegenhaltungen:
- EP-A1- 1 510 801
- FR-A- 1 488 746

## Beschreibung

Die Erfindung betrifft eine Baugruppe, umfassend eine Vergleichsstelle mit einer ersten Anschlussklemme und einer zweiten Anschlussklemme zum Anschluss eines Thermoelementes, eine mit der ersten Anschlussklemme und der zweiten Anschlussklemme verbundene Auswerteschaltung, einen ersten Temperatursensor zur Erfassung einer Umgebungstemperatur an der Vergleichsstelle, eine Korrekturschaltung, welche mit dem ersten Temperatursensor verbunden ist, wobei mit einem angeschlossenen Thermoelement eine erste Temperatur an einer Messstelle erfasst wird und mit dem ersten Temperatursensor eine zweite Temperatur an der Vergleichsstelle erfasst wird, und mit der Korrekturschaltung ein Korrekturwert für die erste Temperatur ermittelt wird.

Derartige Baugruppen sind beispielsweise als Analogbaugruppen zur Temperaturmessung mit Thermoelementen aus dem Internetforum:
http://support.automation.siemens.com/WW/view/de/18272332 unter der Beitrags-ID: 18272332 bekannt.

**Auch zeigt die** EP 1 510 801 A1 **eine Vorrichtung zur Messung einer Temperatur mit einem Thermoelement, wobei die Messung durch Erfassung der Temperatur an den Anschlüssen zum Thermoelement korrigiert wird.**

**Die** FR 1 488 746 A **zeigt ein Verfahren und einen Sensor zur Messung hoher Temperaturen, beispielsweise in einem Schmelzofen für Metalle, auf.**

Mit diesen Baugruppen wird eine Temperaturmessung an einer Klemmstelle von Thermoelementen durchgeführt. Dabei werden in der Regel Analogeingabebaugruppen für analoge Peripheriebaugruppen von Automatisierungssystemen eingesetzt. Die Klemmstelle befindet sich vorzugsweise in einem Prozess- oder Frontstecker der entsprechenden Baugruppe. Um bei der Temperaturmessung mit einem Thermoelement eine möglichst hohe Genauigkeit erreichen zu können, ist die Temperatur der Klemmstelle bzw. der Vergleichsstelle so exakt wie möglich zu erfassen. Das bedeutet, die Temperaturerfassung für die Messung an der Klemmstelle muss vorzugsweise in unmittelbarer Nähe der Klemme erfolgen. Ein mit dieser Temperaturmessung ermittelter Korrekturwert kann dann den Wert der eigentlichen Prozesstemperaturmessung, also der ersten Temperatur, korrigieren.

Da bei heutigen Baugruppen ein Temperatursensor, beispielsweise ein PTC-Widerstand, zur genauen Messung an der Klemmstelle, direkt an der Klemmstelle eingesetzt wird, können Luft- und Kriechstrecken für Spannungen und Ströme, wie sie beispielsweise nach der UL-Zulassung gefordert sind, nicht eingehalten werden.

Es ist daher die Aufgabe der Erfindung die eingangs genannte Baugruppe derart zu modifizieren, dass die Luft- und Kriechstrecken eingehalten werden können und es dennoch ermöglicht wird, eine genaue Temperaturmessung an der Klemmstelle bereitzustellen.

Die Aufgabe wird bei der Baugruppe mit der Merkmalskombination des Anspruchs 1 gelöst. **Dadurch**, dass der erste Temperatursensor als ein faseroptischer Temperatursensor ausgestaltet ist und die Korrekturschaltung ausgestaltet ist eine durch den faseroptischen Temperatursensor an die Korrekturschaltung weitergeleitete Strahlung in den Korrekturwert zu wandeln. Durch die Ausgestaltung des Temperatursensors als ein faseroptischer Temperatursensor, welcher für den elektrischen Strom nicht leitend ist, können in vorteilhafter Weise die nötigen Luft- und Kriechstrecken für Ströme und Spannungen eingehalten werden. **Dabei ist die Baugruppe mit dem faseroptischen Temperatursensor derart ausgestaltet, dass dieser einen Lichtwellenleiter aufweist und dazu ausgestaltet ist, eine Infrarotstrahlung direkt von der Anschlussklemme zur Korrekturschaltung zu leiten, wobei die Korrekturschaltung einen Infrarot-Detektor aufweist.**

Vorteilhafterweise ist in der Baugruppe der erste Temperatursensor derart angeordnet, dass eine erste Temperaturstrahlung der ersten Anschlussklemme erfasst wird. Die Temperaturerfassung direkt an der Anschlussstelle bzw. der Klemmstelle oder auch der Vergleichsstelle kann so so exakt wie möglich erfasst werden und damit die Genauigkeit der Temperaturmessung über das Thermoelement erhöht werden.

In einer weiteren Ausgestaltung der Baugruppe ist ein zweiter Temperatursensor derart angeordnet, dass eine zweite Temperaturstrahlung der zweiten Anschlussklemme erfasst wird. Da es nicht immer möglich ist, die Temperatur an den Anschlussklemmen bzw. an der Vergleichsstelle konstant zu halten und es möglich ist, dass die Temperatur an der Vergleichsstelle von einer Anschlussklemme zur anderen Anschlussklemme sich unterscheidet, ist es von Vorteil, wenn für jede Anschlussklemme eine individuelle Temperatur ermittelt wird.

In einer weiteren Ausgestaltung ist die Korrekturschaltung entfernt von den Anschlussklemmen auf einer Leiterplatte der Baugruppe angeordnet. Eine Temperaturmessung der Anschlussklemmen erfolgt somit mittels einer Infrarotmessung unmittelbar an der Anschlussklemme. Bei einer Ausgestaltung des ersten und/oder zweiten Temperatursensors als Lichtwellenleiter, wobei diese beispielsweise in einem Frontstecker der Baugruppe integriert sind, wird die Infrarotstrahlung direkt an der Anschlussklemme erfasst und diese Infrarotstrahlung wird zu einem Infrarot-Detektor auf der Leiterplatte der Baugruppe weitergeleitet. Bei dieser Art der Erfassung der Anschlussklemmentemperatur können nicht nur die Luft- und Kriechstrecken eingehalten werden, sondern es ist auch möglich, eine kompaktere Bauform der Baugruppe bereitzustellen.

Für den Einsatz in der Industrieautomatisierung ist die Baugruppe vorteilhafterweise als eine Analogeingabebaugruppe für ein Automatisierungssystem zur Steuerung industrieller Prozesse ausgestaltet.

Ein Ausführungsbeispiel der Erfindung ist in der Zeichnung dargestellt. Es zeigen
- FIG 1: eine prinzipielle Darstellung eines Thermoelement-Messkreises und die
- FIG 2: eine Baugruppe mit Lichtwellenleiter als Temperatursensoren.

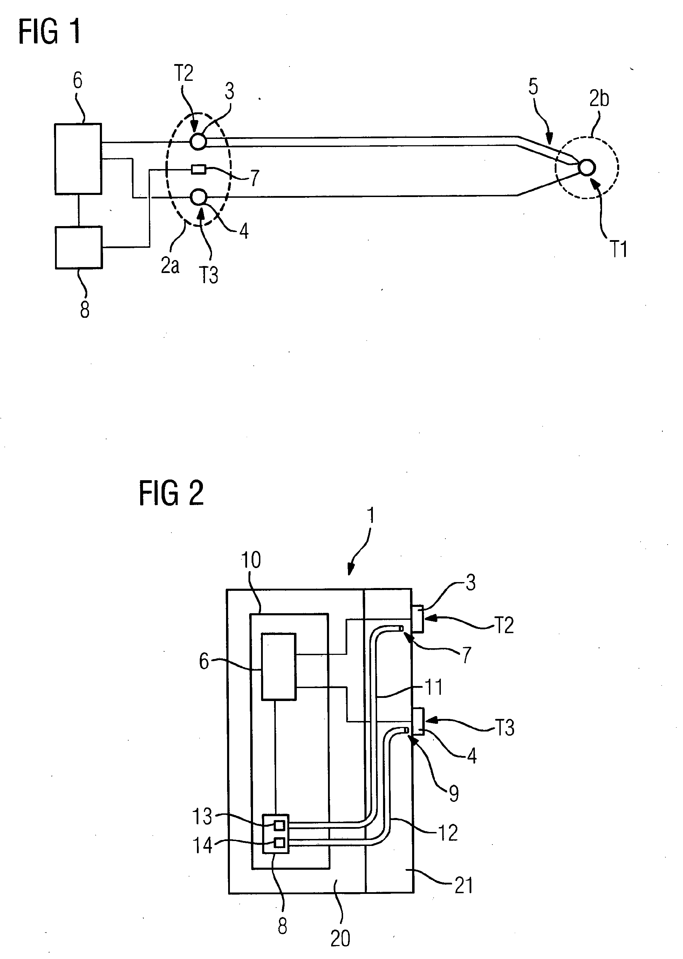

Gemäß FIG 1 ist ein Thermoelement-Messkreis mit einer Vergleichsstelle 2a mit einer ersten Anschlussklemme 3 und einer zweiten Anschlussklemme 4 zum Anschluss eines Thermoelementes 5 dargestellt. Das Thermoelement 5 ist mit seiner Messspitze in einer Messstelle 2b, in welcher eine erste Temperatur T1 erfasst werden soll, angeordnet. Das Thermoelement 5 mit seinen Zuleitungen, welche an die erste Anschlussklemme 3 und an die zweite Anschlussklemme 4 angeschlossen sind, weist einen positiven Leiter und einen negativen Leiter auf, wobei diese Leiter aus zwei unterschiedlichen Metallen oder Metalllegierungen bestehen.

An der ersten Anschlussklemme 3 und der zweiten Anschlussklemme 4 ergibt sich somit eine Übergangsstelle auf unterschiedliche Metalle, weil beispielsweise die Leitungen zwischen einer Auswerteschaltung 6 und der ersten Anschlussklemme 3 und der zweiten Anschlussklemme 4 aus Kupfer sind. Die erste Anschlussklemme 3 und die zweite Anschlussklemme 4 liegen innerhalb der Vergleichsstelle 2a, wobei innerhalb dieser Vergleichsstelle 2a an der ersten Anschlussklemme 3 eine zweite Temperatur T2 und an der zweiten Anschlussklemme 4 eine dritte Temperatur T3 vorherrschen kann. Für eine erste Messvariante ist ein erster Temperatursensor 7 mittig in der Vergleichsstelle 2a angeordnet, wobei er einen Mittelwert aus der zweiten und dritten Temperatur T2,T3 ermittelt. Der erste Temperatursensor 7 ist mit einer Korrekturschaltung 8 verbunden, wobei diese Korrekturschaltung 8 wiederum derart ausgestaltet ist, einen Korrekturwert zu ermitteln und diesen an die Auswerteschaltung 6 weiterzuleiten. Die Kompensation bzw. die Bereitstellung des Korrekturwertes erfolgt durch eine geeignete Verrechnung der jeweiligen Temperaturen T1,T2,T3. Um die absolute Messtemperatur, nämlich die erste Temperatur T1, zu erfassen, ist es notwendig, die Temperaturen an den Anschlussklemmen 3,4 der Vergleichsstelle zu erfassen.

Die durch den Temperatursensor 7 ermittelte Temperatur muss dann in eine entsprechende Thermospannung, welche dem Metall des Thermoelementes 5 entspricht, umgerechnet werden und zur gemessenen Spannung addiert werden, um mit diesem so erhalten Wert, beispielsweise über eine Berechnung oder über eine Tabelle die eigentliche Temperatur zu erhalten.

Gemäß FIG 2 ist eine Baugruppe 1, umfassend die Vergleichsstelle 2a mit der ersten Anschlussklemme 3 und der zweiten Anschlussklemme 4 zum Anschluss des Thermoelementes 5 dargestellt. Die erste Anschlussklemme 3 und die zweite Anschlussklemme 4 sind mit der Auswerteschaltung 6 verbunden. Die Auswerteschaltung 6 ist neben der Korrekturschaltung 8 auf einer Leiterplatte 10 der Baugruppe 1 angeordnet. An die Korrekturschaltung 8 ist ein erster Lichtwellenleiter 11 und ein zweiter Lichtwellenleiter 12 angeschlossen. Der erste Lichtwellenleiter 11 wird von der Korrekturschaltung 8 flexibel durch ein Gehäuse 20 der Baugruppe 1 in einem Frontstecker 21 geführt. Im Frontstecker 21 ist die erste Anschlussklemme 3 angeordnet und über eine elektrische Verbindung mit der Auswerteschaltung 6 verbunden. Das in den Frontstecker 21 geführte Ende des ersten Lichtwellenleiters 11 bildet einen faseroptischen Temperatursensor, nämlich den Temperatursensor 7. Ebenfalls ist der zweite Lichtwellenleiter 12 von der Korrekturschaltung 8 flexibel durch das Gehäuse 20 in den Frontstecker 21 zu der zweiten Anschlussklemme 4 geführt. Auch das Ende des zweiten Lichtwellenleiters 12 bildet einen faseroptischen Temperatursensor, nämlich den zweiten Temperatursensor 9.

Der erste Lichtwellenleiter 11 und der zweite Lichtwellenleiter 12 sind jeweils mit einem ersten Infrarotdetektor 13 und einem zweiten Infrarotdetektor 14, welche in der Korrekturschaltung 8 angeordnet sind, verbunden.

Mit dieser Ausgestaltung können auf vorteilhafte Weise die Luft- und Kriechstrecken für Spannungen und Ströme eingehalten werden und zudem eine kompaktere Bauform der Baugruppe 1 ermöglicht werden. Durch die direkte Erfassung der Temperatur der Anschlussklemmen 3,4 wird die Genauigkeit der Messwerterfassung verbessert. Mit dieser Ausgestaltung mittels Lichtwellenleiter 11,12 können mehrere Temperatursensoren 7,9 in Frontstecker 21 platziert werden und somit kann eine individuelle Temperaturerfassung jeder Klemmstelle ermöglicht werden.

## Patentansprüche

1. Baugruppe (1), umfassend
- eine Vergleichsstelle (2a) mit einer ersten Anschlussklemme (3) und einer zweiten Anschlussklemme (4) zum Anschluss eines Thermoelementes (5),
- eine mit der ersten Anschlussklemme (3) und der zweiten Anschlussklemme (4) verbundene Auswerteschaltung (6),
- einen ersten Temperatursensor (7) zur Erfassung einer Umgebungstemperatur an der Vergleichsstelle (2),
- eine Korrekturschaltung (8), welche mit dem ersten Temperatursensor (7) verbunden ist,
wobei mit einem angeschlossenen Thermoelement (5) eine erste Temperatur (T1) an einer Messstelle (2b) erfassbar ist und mit dem ersten Temperatursensor (7) eine zweite Temperatur (T2) an der Vergleichsstelle (2) erfassbar ist, und mit der Korrekturschaltung (8) ein Korrekturwert für die erste Temperatur (T1) ermittelbar ist,
**dadurch gekennzeichnet, dass** der erste Temperatursensor (7) als ein faseroptischer Temperatursensor ausgestaltet ist und die Korrekturschaltung (8) ausgestaltet ist eine durch den faseroptischen Temperatursensor an die Korrekturschaltung (8) weitergeleitete Strahlung in den Korrekturwert zu wandeln, **wobei der faseroptische Temperatursensor einen Lichtwellenleiter (11, 12) aufweist und dazu ausgestaltet ist eine Infrarotstrahlung direkt von der Anschlussklemme (3,4) zur Korrekturschaltung (8) zu leiten, welche einen Infrarot-Detektor (13,14) aufweist, wobei der Lichtwellenleiter (11,12) von der Korrekturschaltung (8) flexibel durch ein Gehäuse (20) der Baugruppe (1) in einen Frontstecker (21) geführt ist.**

2. Baugruppe (1) nach Anspruch 1, wobei der erste Temperatursensor (7) derart angeordnet ist, dass eine erste Temperaturstrahlung der ersten Anschlussklemme (3) erfasst wird.

3. Baugruppe (1) nach Anspruch 2, wobei ein zweiter Temperatursensor (9) derart angeordnet ist, dass eine zweite Temperaturstrahlung der zweiten Anschlussklemme (4) erfasst wird.

4. Baugruppe (1) nach einem der Ansprüche 1 bis **3**, wobei die Korrekturschaltung (8) entfernt von den Anschlussklemmen (3, 4) auf einer Leiterplatte (10) der Baugruppe (1) angeordnet ist.

5. Baugruppe (1) nach einem der Ansprüche 1 bis **4**, ausgestaltet als eine Analogeingabebaugruppe für ein Automatisierungssystem zur Steuerung industrieller Prozesse.

## Claims

1. Subassembly (1) comprising
- a comparison point (2a) having a first connecting terminal (3) and a second connecting terminal (4) for connecting a thermocouple (5),
- an evaluation circuit (6) which is connected to the first connecting terminal (3) and to the second connecting terminal (4),
- a first temperature sensor (7) for recording an ambient temperature at the comparison point (2),
- a correction circuit (8) which is connected to the first temperature sensor (7),
a connected thermocouple (5) being able to be used to record a first temperature (T1) at a measuring point (2b) and the first temperature sensor (7) being able to be used to record a second temperature (T2) at the comparison point (2) and the correction circuit (8) being able to be used to determine a correction value for the first temperature (T1),
**characterized in that** the first temperature sensor (7) is in the form of a fibre-optic temperature sensor and the correction circuit (8) is configured to convert radiation forwarded to the correction circuit (8) by the fibre-optic temperature sensor into the correction value, the fibre-optic temperature sensor having an optical waveguide (11, 12) and being configured to pass infrared radiation directly from the connecting terminal (3, 4) to the correction circuit (8) which has an infrared detector (13, 14), the optical waveguide (11, 12) being flexibly guided by the correction circuit (8) through a housing (20) of the subassembly (1) into a front connector (21).

2. Subassembly (1) according to Claim 1, the first temperature sensor (7) being arranged in such a manner that first thermal radiation of the first connecting terminal (3) is recorded.

3. Subassembly (1) according to Claim 2, a second temperature sensor (9) being arranged in such a manner that second thermal radiation of the second connecting terminal (4) is recorded.

4. Subassembly (1) according to one of Claims 1 to 3, the correction circuit (8) being arranged away from the connecting terminals (3, 4) on a printed circuit board (10) of the subassembly (1).

5. Subassembly (1) according to one of Claims 1 to 4, in the form of an analogue input subassembly for an automation system for controlling industrial processes.

## Revendications

1. Module ( 1 ), comprenant
- un endroit ( 2a ) de comparaison ayant une première borne ( 3 ) de connexion et une deuxième borne ( 4 ) de connexion pour la connexion d'un thermocouple ( 5 ),
- un circuit ( 6 ) d'exploitation relié à la première borne ( 3 ) de connexion et à la deuxième borne ( 4 ) de connexion,
- un premier capteur ( 7 ) de température pour la détection d'une température ambiante à l'endroit ( 2 ) de comparaison,
- un circuit ( 8 ) de correction qui est relié au premier capteur ( 7 ) de température,
dans lequel une première température ( T1 ) peut être détectée à un endroit ( 2b ) de mesure par un thermocouple ( 5 ) raccordé et une deuxième température ( T2 ) peut être détectée à l'endroit de comparaison par le premier capteur ( 7 ) de température et une valeur de correction de la première température ( T1 ) peut être déterminée par le circuit ( 8 ) de correction,
**caractérisé en ce que** le premier capteur ( 7 ) de température est conformé en capteur de température à fibre optique et le circuit ( 8 ) de correction est conformé pour transformer en la valeur de correction un rayonnement acheminé par le capteur de température à fibre optique au circuit ( 8 ) de correction, le capteur de température à fibre optique comportant un conducteur ( 11, 12 ) d'ondes lumineuses et étant conformé pour diriger un rayonnement infrarouge directement de la borne ( 3, 4 ) de connexion au circuit ( 8 ) de correction qui a un détecteur ( 13, 14 ) infrarouge, le conducteur ( 11, 12 ) d'ondes lumineuses étant guidé du circuit ( 8 ) de correction à un connecteur ( 21 ) avant de manière souple en passant dans un boîtier ( 20 ) du module ( 1 ).

2. Module ( 1 ) dans lequel le premier capteur ( 7 ) de température est disposé de manière à détecter un premier rayonnement thermique de la première borne ( 3 ) de connexion.

3. Module ( 1 ) suivant la revendication 2, dans lequel un deuxième capteur ( 9 ) de température est disposé de manière à détecter un deuxième rayonnement thermique de la deuxième borne ( 4 ) de connexion.

4. Module ( 1 ) suivant l'une des revendications 1 à 3, dans lequel le circuit ( 8 ) de correction est disposé sur une plaquette ( 10 ) à circuit imprimé du module ( 1 ) en étant éloigné des bornes ( 3, 4 ) de connexion.

5. Module ( 1 ) suivant l'une des revendications 1 à 4, conformé en module d'entrée analogique pour un système d'automatisation de commande de processus industriel.
